(19) Europäisches Patentamt
European Patent Office
Office européen des brevets

(11) **EP 3 780 310 A1**

(12) **EUROPEAN PATENT APPLICATION**
published in accordance with Art. 153(4) EPC

(43) Date of publication:
**17.02.2021 Bulletin 2021/07**

(51) Int Cl.:
**H02J 3/24** *(2006.01)*          **H02J 3/38** *(2006.01)*

(21) Application number: **18912725.1**

(22) Date of filing: **20.12.2018**

(86) International application number:
**PCT/JP2018/046994**

(87) International publication number:
**WO 2019/187411 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.03.2018 JP 2018061111**

(71) Applicant: **Hitachi, Ltd.
Tokyo 100-8280 (JP)**

(72) Inventors:
• **LEE Chia Tse
  Tokyo 100-8280 (JP)**
• **KIKUCHI Akira
  Tokyo 100-8280 (JP)**
• **ITO Tomomichi
  Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **CONTROL DEVICE FOR DISTRIBUTED POWER SOURCE**

(57)      There is provided a controller device for a distributed power source, and the controller is capable of stabilizing the output power of the distributed power source interconnected to a power system. The controller (100) for the distributed power source sets a virtual inertia for a power converter (104) that interconnects the distributed power source to the power system, and calculates a virtual inertia value on the basis of a specification and an operation state of the distributed power source and sets the virtual inertia for the power converter (104) on the basis of the calculated virtual inertia value or a required inertia value required by a grid operator (101).

*FIG. 1*

**Description**

Technical Field

The present invention relates to a controller for a distributed power source for stabilizing the operation of the distributed power source interconnected to a power system.

Background Art

After the 22nd Conference of the Parties to the Framework Convention on Climate Change (COP22), nations throughout the world have introduced renewable energy sources (hereinafter, renewable energy sources will be abbreviated to "RESs"). In the case where RESs are introduced, power converters are indispensable in order to adjust and transmit powers generated by the RESs to a power system.

In an existing power system, almost all power generation facilities are synchronous generators. These synchronous generators include rotors rotating in synchronization with the system frequency of the power system. These rotors have rotatory inertia moments respectively, so that, if plural synchronous generators in the power system rotate in synch with one another, a large inertia moment is generated in the system. Owing to the generation of this large inertia moment, the frequency of the power system becomes a constant frequency such as 50 Hz or 60 Hz.

However, as the introduction of RESs is spread more widely, the percentage of generators having inertias and synchronous characteristics becomes relatively smaller because power converters in a renewable energy (power generation) system that uses RESs do not have inertias. Therefore, there is a fear that the stability of a power system will be reduced.

For such a situation, conventional technologies are known well each of which controls power converters included in a distributed power source such as a renewable energy generation system on the basis of a motion equation including a virtual inertia constant in such a way that the power converters operate as virtual synchronous generators (for example, refer to Patent Literature 1).

Citation List

Patent Literature

Patent Literature 1: U.S. Unexamined Patent Application Publication No. 2011/0270463

Summary of Invention

Technical Problem

In the abovementioned conventional technologies, if a disturbance such as a system trouble occurs, there is a risk that the power fluctuations of the output powers of power converters transiently occur. In other words, in the case where a disturbance occurs, there is a possibility that the operation of a distributed power source such as a renewable energy generation system becomes unstable.

Therefore, an object of the present invention is to provide a controller for a distributed power source for stabilizing the output power of the distributed power source interconnected to a power system.

Solution to Problem

In order to solve the abovementioned problem, a controller for a distributed power source according to the present invention sets a virtual inertia for a power converter that interconnects the distributed power source to a power system, and the controller calculates a virtual inertia value on the basis of the specification and the operation state of the distributed power source, and sets the virtual inertia for the power converter on the basis of the calculated virtual inertia value or a required inertia value requested by a grid operator.

Advantageous Effects of Invention

According to the present invention, the power fluctuation occurring in the output power of power converter can be suppressed.

Problems, configurations, and advantageous effects other than those mentioned above will be explicitly shown by the following explanations of an embodiment of the present invention.

Brief Description of Drawings

Figure 1 shows the configuration of a controller of a renewable energy system that is an embodiment of the present invention.

Figure 2 shows the configuration of the renewable energy system shown in Figure 1.

Figure 3 shows the configuration of a decentralized controller.

Figure 4 shows an example of a time change of an active power outputted by a power converter in the case where the virtual inertia is changed while the virtual damping constant is kept constant.

Figure 5 shows an example of a time change of the active power outputted by the power converter device in the case where the virtual damping constant is changed while the virtual inertia is kept constant.

Figure 6 is a flowchart showing a processing operation executed by a grid interconnection operation controller.

Figure 7 shows the functional configuration of a grid interconnection operation controller at the time when step S2 in Figure 6 is executed.

Description of Embodiments

Hereinafter, an embodiment of the present invention will be explained with reference to the accompanying drawings. Here, in respective drawings, components having the same reference signs show that these components are the same components or components having similar functions.

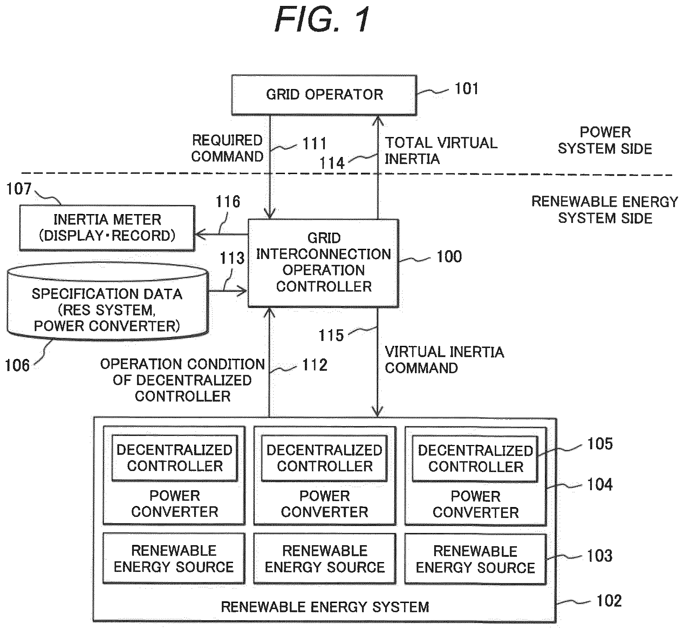

Figure 1 shows the configuration of a controller of a renewable energy (power generation) system interconnected to a power system that is an embodiment of the present invention.

As shown in Figure 1, a renewable energy system 102 includes plural power converters 104. Each of the plural power converters 104 converts power generated by a renewable energy source 103 into AC power having a system voltage and a system frequency, and outputs the AC power to a power system (not shown). A power converter 104 includes a main circuit including a semiconductor switching element, and the switching of this main circuit is controlled by a decentralized controller 105, so that the output power of the power converter 104 is controlled.

Here, as the renewable energy source 103, a wind power generator, a solar battery, or the like is used. In addition, as the main circuit of the power converter 104, a power conversion circuit such as a three-phase inverter circuit is adopted.

A grid interconnection operation controller 100 shown in Figure 1 calculates virtual inertia values (virtual inertia constants) and virtual damping constant values, which are set for plural decentralized controllers 105 respectively, on the basis of a required command 111 that is transmitted by a grid operator via a communication line and that shows inertia values required by the renewable energy system 102, the operation conditions 112 of the decentralized controllers 105 transmitted from the decentralized controllers 105, and specification data 113 about the renewable energy system 102 and the power converters 104 that are read from a storage device 106, and the grid interconnection operation controller 100 transmits the calculated virtual inertia values to the renewable energy system 102 as a virtual inertia command 115. Here, grid interconnection operation controller 100 is configured with a computer system and performs pieces of processing such as the calculation of virtual inertia values by executing predefined programs.

The decentralized controllers 105 control the power converters 104 on the basis of the virtual inertia values set by the grid interconnection operation controller 100 in such a way that the power converters 104 show such inertias as shown by synchronous generators.

Here, the grid operator 101 is, for example, an electric power company. The grid operator sets a percentage of an inertia value to be allocated to the renewable energy system 102 relative to an inertia value necessary for stabilizing the power system and transmits the set inertia value as the required command 111 from a load dispatching center or the like via a communication device.

Furthermore, the grid interconnection operation controller 100 informs the grid operator 101 of a total virtual inertia 114 that is the total sum of virtual inertia values set for the plural decentralized controllers 105 respectively, that is to say, of a virtual inertia value possessed by the renewable energy system via a communication line.

An inertia meter 107 shown in Figure 1 displays information 116 such as the virtual inertia command 115 and the total virtual inertia 114, which are calculated by the grid interconnection operation controller 100, on a display device or the like while updating the information sequentially or as needed, and at the same time, records the information in a storage device such as a semiconductor memory. Therefore, the operation conditions of the decentralized controllers 105 can easily be checked at the renewable energy system side.

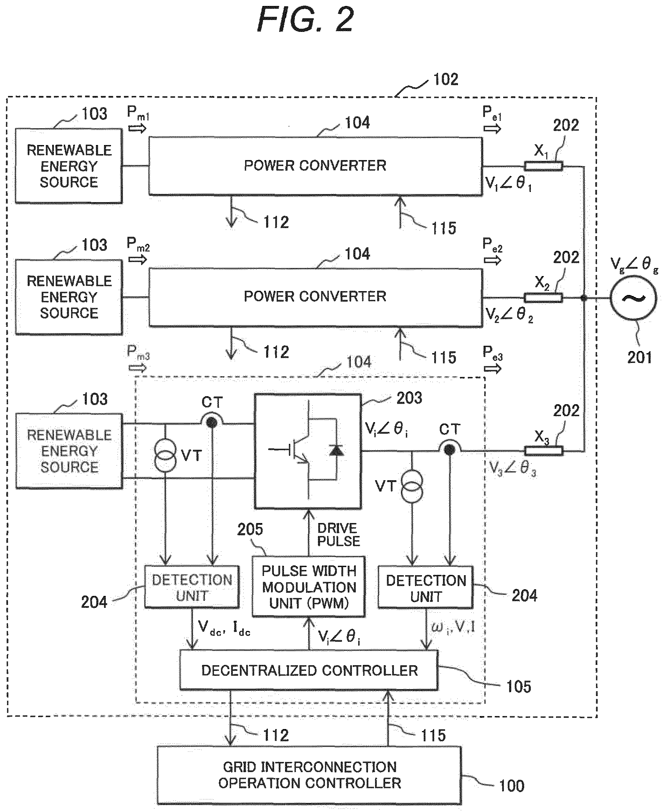

Figure 2 shows the configuration of the renewable energy system 102 shown in Figure 1.

As shown in Fig 2, in the renewable energy system 102, plural renewable energy sources 103 (three in Figure 2) are connected to the inputs of plural power converters 104 (three in Figure 2) respectively. The respective outputs of the plural power converters 104 are connected to one another parallel and multiply via transmission cables 202, and the outputs connected parallel and multiply are connected to a power system 201. The power converters 104 convert powers ($P_{mi}$: i=1 to 3) from the renewable energy sources 103 into AC powers ($P_{ei}$: i=1 to 3) and outputs the AC powers to the power system 201.

A power converter 104 includes a power conversion main circuit 203 (an inverter) including a semiconductor switching element (an insulated gate bipolar transistor in Figure 2) and a flywheel diode. A decentralized controller 105 creates a voltage command ($Vi\angle\theta i$) on the basis of the virtual inertia command 115 from the grid interconnection operation controller 100 as described above and, at the same time, on the basis of the input and output currents and the input and output voltages of the power conversion main circuit 203 that are detected by detection units 204 using current sensors CT and voltage sensors VT. A pulse width modulation unit 205 creates a drive pulse for driving the semiconductor switching element of the power conversion main circuit 203 by comparing the voltage command ($Vi\angle\theta i$) created by the decentralized controller 105 with a carrier signal (not shown) such as a triangular wave, that is to say, by using pulse width modulation (PWM). The output power of the power converter 104 is controlled by the operation of the power conversion main circuit 203 driven by this drive pulse in such a way that the output voltage coincides with the voltage command.

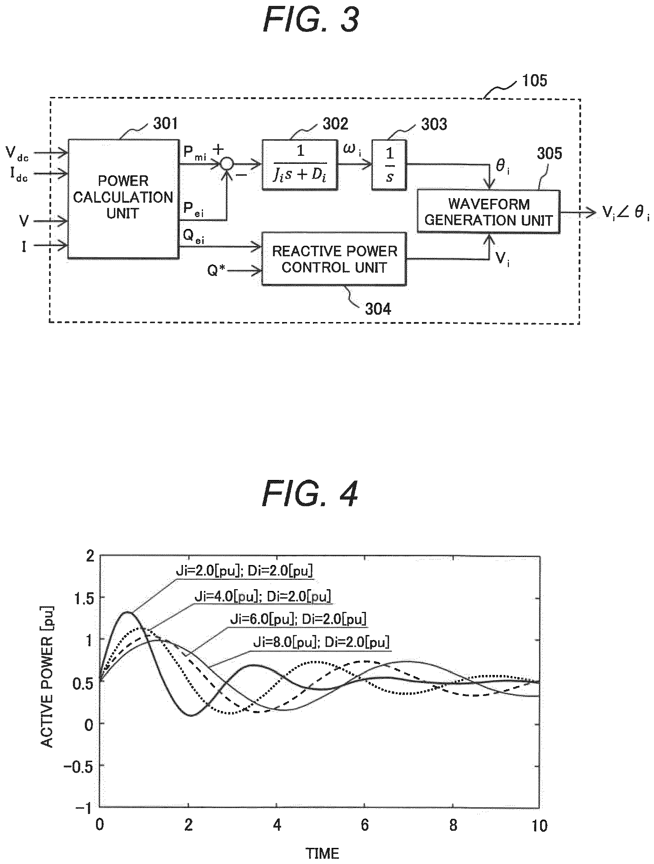

Figure 3 shows the configuration of the decentralized controller 105.

As shown in Figure 3, the decentralized controller 105 includes a power calculation unit 301, a virtual synchronous generator model 302 that simulates the operation of a synchronous generator having a mechanical inertia, an integrator 303, a waveform generation unit 305 that creates the voltage command.

The power calculation unit 301 calculates a DC input power (an active power $P_{mi}$) and AC output powers (an active power Pei and a reactive power Qei) in the power converter 104 on the basis of the voltage ($V_{dc}$) and the current ($I_{dc}$) on the DC side of the power conversion main circuit 203 (Figure 2) of the power converter 104 and the voltage (V) and the current (I) on the AC side of the power conversion main circuit 203. Here, the voltages and the currents on the DC side and the AC side are detected by the detection units 204 (Figure 2) included in the power converter 104.

The virtual synchronous generator model 302 is set on the basis of the motion equation (after-mentioned Expression (2)) of a synchronous generator including a virtual inertia constant Ji and a virtual damping constant Di. The angular frequency ($\omega_i$) of the AC output is calculated in accordance with a difference between the input power (the active power $P_{mi}$) into the converter 104 and the output power (the active power $P_{ei}$) of the power converter 104 by the virtual synchronous generator model 302, where the input power (the active power Pmi) and the AC output power (the active power $P_{ei}$) are calculated by the power calculation unit 301. In the motion equation of the synchronous generator, the active powers $P_{mi}$ and $P_{ei}$ are respectively corresponding to a mechanical rotating power given to the generator and the electric output of the generator. In addition, the virtual inertia constant Ji and the virtual damping constant Di are respectively corresponding to an inertia moment possessed by the rotors of the synchronous generator and a damping effect brought about by the damper winding of the synchronous generator. Here, in this embodiment, the virtual inertia constant Ji and the virtual damping constant Di are calculated by the grid interconnection operation controller 100 (Figure 2) and given to the decentralized controller 105.

The integrator 303 integrates the angular frequency ($\omega_i$) calculated by the virtual synchronous generator model 302 to calculate the phase angle ($\theta_i$) of the AC output.

The reactive power control unit 304 compares the output power (reactive power $Q_{ei}$) of the power converter 104 calculated by the power calculation unit 301 with a reactive power command ($Q^*$) given by another controller (not shown), and calculates an output voltage (Vi) that makes the output power (reactive power $Q_{ei}$) coincide with the reactive power command ($Q^*$) in accordance with the comparison result.

The waveform generation unit 305 creates the voltage command ($Vi\angle\theta i$) to be given to the pulse width modulation unit 205 (Figure 2) in accordance with the output voltage (Vi) calculated by the reactive power control unit 304 and the phase angle ($\theta i$) calculated by the integrator 303.

The decentralized controller 105 controls the power converter 104 in such a way, which makes it possible for the renewable energy system 102 (Figure 2) to have power generation characteristics similar to power generation characteristics possessed by a synchronous generator.

Next, the behavior of the renewable energy system 102, which includes plural power converters 104 each of which includes a decentralized controller 105 shown in Figure 3, will be explained.

An active power Pei outputted from each power converter 104 to the power system is given by Expression (1) . [Math.1]

$$P_{ei} = \frac{V_i V_g}{X_i} \sin\left(\theta_i - \theta_g\right) \approx \frac{V_i V_g}{X_i}\left(\theta_i - \theta_g\right) \qquad (1)$$

In Expression (1), $V_i$ and $V_g$ are respectively the output voltage of the power converter and the voltage of the power system, and $\theta_i$ and $\theta_g$ are respectively the phase angle of the output voltage of the power converter and the phase angle of the voltage of the power system. Furthermore, Xi is the impedance of a cable that connects the output of the power converter and the power system. Here, a sine function in Expression (1) is approximated under an assumption that the difference between $\theta_i$ and $\theta_g$ is small. Here, $V_i$, $V_g$, $\theta_i$, $\theta_g$, and $X_i$ are denoted in Figure 2 (where i=1, 2, 3).

In the virtual synchronous generator model 302 (Figure 3), a motion equation is given by Expression (2), where the phase angle response is represented by $\theta_i$.

[Math.2]

$$P_{mi} - P_{ei} = J_i \ddot{\theta}_i + D_i \dot{\theta}_i \qquad (2)$$

In Expression (2), as described above, $P_{mi}$ and Pei are respectively an active power inputted into each power converter 104 and an active power outputted from each power converter 104 to the power system.

Expression (3) is obtained from Expression (1) and Expression (2). As described above, $P_{mi}$ and $P_{ei}$ respectively correspond to a mechanical rotating power given to the synchronous generator and the electric output from the synchronous generator. Here, $P_{mi}$ and $P_{ei}$ are denoted in Figure 2 (where i=1, 2, 3).

[Math.3]

$$J_i \ddot{\theta}_i + D_i \dot{\theta}_i + \frac{V_i V_g}{X_i} \theta_i = P_{mi} + \frac{V_i V_g}{X_i} \theta_g \qquad (3)$$

Now, the average value of the phase angles ($\theta_1$, $\theta_2$, $\theta_3$ in Figure 2) of the plural power converters 104 included in the renewable energy system 102 is to be donated by $\theta a$. In addition, in this embodiment, it will be assumed that, because the plural power converters 104 are disposed close to one another in the renewable energy system 102, the phase angles $\theta_i$ in Expression (3), the first order derivative of $\theta_i$ with respect to time, that is to say, angular frequencies, and the second order derivative of $\theta_i$ with respect to time, that is to say, the time variations of the angular frequencies are almost the same as one another regarding the plural power converters 104. Under the above assumption, Expression (4) is given from Expression (3) regarding each of the plural power converters 104 (by adding the right-hand sides and lefthand sides of Expressions (3) regarding the plural power converters 104 respectively).

[Math.4]

$$\sum J_i \cdot \ddot{\theta}_a + \sum D_i \cdot \dot{\theta}_a + V_g \cdot \sum \frac{V_i}{X_i} \cdot \theta_a = \sum P_{mi} + V_g \cdot \sum \frac{V_i}{X_i} \cdot \theta_g \qquad (4)$$

Expression (3) shows, so to speak, that the phase angle response $\theta_a$ of the renewable energy system 102 can be represented by a second-order linear differential equation. In this case, a characteristic equation for obtaining $\theta_a$ is represented by Expression (5).

[Math. 5]

$$s^2 + 2\xi\omega_n \cdot s + \omega_n^2 \qquad (5)$$

In Expression (5), $\omega_n$ is an eigen frequency (a natural frequency), and $\xi$ is a damping factor. Expression (6) is obtained using the coefficients in Expression (4) and Expression (5).

[Math. 6]

$$2\xi\omega_n = \frac{\sum D_i}{\sum J_i} \qquad \omega_n^2 = \frac{V_g \sum \frac{V_i}{X_i}}{\sum J_i} \qquad (6)$$

As is clear from Expression (6), the value of a total virtual inertia, which is obtained by summing up the virtual inertia of each power converter 104, and the value of a total virtual damping constant, which is obtained by summing up the virtual damping constant of each power converter 104, have influence on the entire operation of the renewable energy system 102. Therefore, in this embodiment, as described later, the entire operation of the renewable energy system 102 is stabilized by optimizing the values of the total virtual inertia value and the total virtual damping constant.

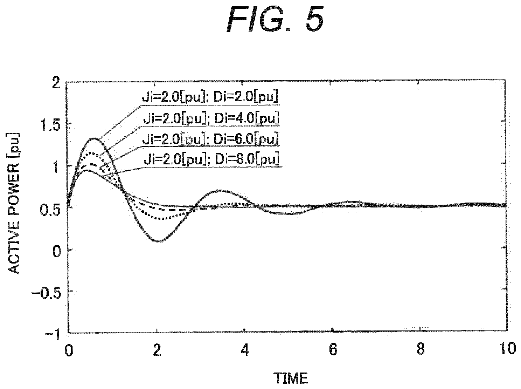

Next, the influence brought about by the virtual inertia and virtual damping constant in each power converter will be explained with reference to Figure 4 and Figure 5.

Figure 4 shows an example of a time change of an active power outputted by a power converter 104 in the case where the virtual inertia $J_i$ is changed while the virtual damping constant $D_i$ is kept constant. Here, Figure 4 is obtained as a result of the inventors' study based on the abovementioned Expression (3). Furthermore, in Figure 4, the respective values of the active power, $J_i$ and $D_i$ are shown by pu (per unit). The initial value of the active power is set 0.5 pu.

As shown in Figure 4, the state of the vibration of the active power changes in accordance with the value of the virtual inertia $J_i$. As the value of $J_i$ is set larger, the peak value of the vibrating active power more decreases. Therefore, by controlling the setting of $J_i$, the fluctuation of the output power of the power converter can be suppressed.

Figure 5 shows an example of a time change of the active power outputted by the power converter 104 in the case where the virtual damping constant $D_i$ is changed while the virtual inertia $J_i$ is kept constant. Here, Figure 5 is obtained as a result of the inventors' study based on the abovementioned Expression (3). Furthermore, in Figure 5, the respective values of the active power, $J_i$ and $D_i$ are shown by pu (per unit). The initial value of the active power is set 0.5 pu.

As shown in Figure 5, the state of the vibration of the active power changes in accordance with the value of the virtual damping constant $D_i$. As the value of $D_i$ is set larger, the peak value of the vibrating active power more decreases. Therefore, by controlling the setting of $D_i$, the fluctuation of the output power of the power converter can be suppressed.

Here, as shown in Figure 4 and Figure 5, the amplitude of any of the values of $J_i$ and $D_i$ transiently shows a large power fluctuation. Therefore, if a virtual inertia value required by the grid operator is set and the power converter is controlled, there is a possibility that a large power fluctuation that transiently occurs exceeds the capabilities (for example, the rated power capacity and the rated current) of the power converter, which eventually leads to the stoppage of the operation of the power converter. Therefore, in this embodiment, as described later, while the virtual inertia value required by the grid operator is being taken into consideration, a virtual inertia value well-suited for the renewable energy system is set on the renewable energy system side. With this, it becomes possible to surely suppress the power fluctuation without stopping the operation of the renewable energy system.

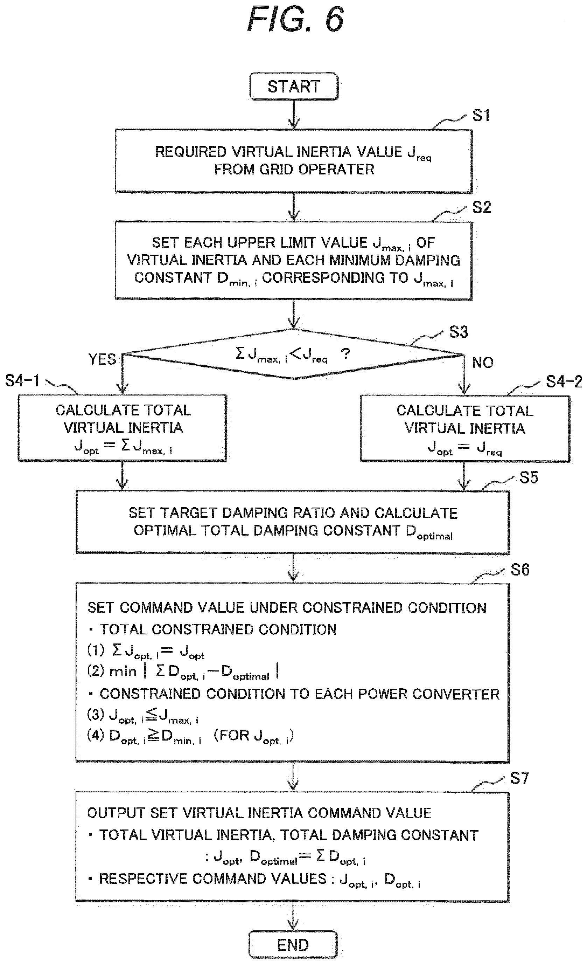

Figure 6 is a flowchart showing a processing operation executed by the grid interconnection operation controller 100 for setting a virtual inertia and a virtual damping constant for the power converter.

At step S1, the grid interconnection operation controller 100 receives a virtual inertia value $J_{req}$ (corresponding to the required command 111 in Figure 1) that the grid operator requires to the renewable energy system 102(at step S1).

Next, at step S2, grid interconnection operation controller 100 sets the upper limit value $J_{max,i}$ of the virtual inertia and the lower limit value $D_{min,i}$ of the virtual damping constant at the time when each power converter is operating with the upper limit value $J_{max,i}$ of the virtual inertia for each power converter in the renewable energy system 102 on the basis of the operation condition 112 of the power converter 104 or the decentralized controller 105 (Figure 1), that is to say, the operation condition of the renewable energy system and the specification data 113 about the renewable energy system 102 including the power converters 104 (Figure 1). Here, a concrete setting means will be described later.

Next, at step S3, the grid interconnection operation controller 100 judges whether or not, a total value "$\sum J_{max,i}$" obtained by summing up the respective upper limits $J_{max,i}$, is smaller than the required virtual inertia value $J_{req}$. In other words, the grid interconnection operation controller judges whether or not the renewable energy system can provide the virtual inertia value $J_{req}$ required by the grid operator. If $\sum J_{max,i}$, the total value obtained by summing up the respective upper limits $J_{max,i}$, is smaller than the virtual inertia value $J_{req}$ required by the grid operator (YES at step S3), the flow proceeds to step S4-1. On the other hand, if $\sum J_{max,i}$ is not smaller than the virtual inertia value $J_{req}$, that is to say, $\sum J_{max,i}$ is equal to or larger than the virtual inertia value $J_{req}$ (NO at step S3), the flow proceeds to step S4-2.

At step S4-1, the grid interconnection operation controller 100 calculates a total virtual inertia value $J_{opt}$ suitable for the renewable energy system 102 on the basis of the result at step S3 (YES) using Expression (7).
[Math. 7]

$$J_{opt} = \sum J_{max,i} \text{ if } \sum J_{max,i} < J_{req} \qquad (7)$$

In this case, because the renewable energy system cannot provide the required virtual inertia value $J_{req}$, $J_{opt}$ becomes $\sum J_{max,i}$, the total value obtained by summing up the upper limit values of the respective power converter.

On the other hand, at step S4-2, the grid interconnection operation controller 100 calculates the total virtual inertia value $J_{opt}$ suitable for the renewable energy system 102 on the basis of the result at step S3 (NO) using Expression (8).

[Math.8]

$$J_{opt} = J_{req} \text{ if } \sum J_{max,i} \ge J_{req} \qquad (8)$$

In this case, because the renewable energy system can provide the requested virtual inertia value $J_{req}$, $J_{opt}$ becomes the requested virtual inertia value $J_{req}$.

After one of step S4-1 and step S4-2 is executed, step S5 is executed.

At step S5, the grid interconnection operation controller 100 calculates a total virtual damping constant value $D_{optimal}$ (an optimal value) suited for the renewable energy system. In this embodiment, regarding the total virtual damping constant value, the damping factor $\xi$ in Expression (5) is adjusted in such a way that the response of the average value $\theta_a$ of the phase angles according to the abovementioned Expression (4) approaches a critical damping response. In this case, if the adjusted damping factor is denoted by $\xi_{optimal}$, $D_{optimal}$ is given by Expression (9) with reference to Expression (6).

[Math. 9]

$$D_{optimal} = 2\xi_{optimal} \sqrt{V_g \sum \frac{V_i}{X_i} J_{opt}} = \sqrt{2V_g \sum \frac{V_i}{X_i} J_{opt}} \qquad (9)$$

In the case of an ideal critical damping response, $\xi_{optimal} = 1$, and the repetitive vibration does not occur. In addition, if $\xi_{optimal}$ is set equal to 0.707 (=$1/2^{1/2}$), the convergence time of the repetitive vibration becomes the shortest.

Next, at step S6, the grid interconnection operation controller sets the virtual inertia value $J_{opt,i}$ and the virtual damping constant value $D_{opt,i}$ for the decentralized controller of each power converter under four constraints shown in Figure 6 on the basis of the calculated total virtual inertia value $J_{opt}$ and the calculated total virtual damping constant $D_{optimal}$. A first constrained condition is that the sum of the respective virtual inertia values $J_{opt,i}$ is equal to the calculated total virtual inertia value $J_{opt}$. A second constrained condition is that the sum of the respective virtual damping constants $D_{opt,i}$ approaches an optimal total virtual damping constant value as much as possible. Third and fourth constrained conditions are constraints for making the operations of each power converter not exceed the rated operations. The third constrained condition is a constraint for making each virtual inertia value $J_{opt,i}$ not exceed the upper limit value $J_{max,i}$. The fourth constrained condition is a constraint for making each virtual damping constant $D_{opt,i}$ equal to or more than the minimum value $D_{min,i}$.

At step S7, the grid interconnection operation controller 100 outputs the calculated $J_{opt}$ and $D_{optimal}$ and transmits $J_{opt}$ and $D_{optimal}$ to the grid operator 101 and the inertia meter 107 (Figure 1). The grid interconnection operation controller 100 also transmits $J_{opt,i}$ and $D_{opt,i}$ to the decentralized controller of each power converter.

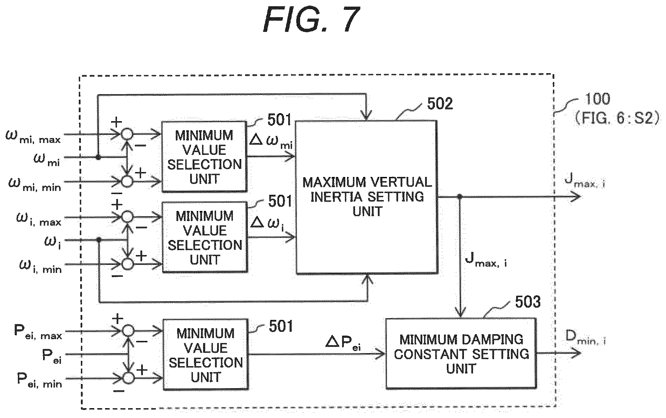

Figure 7 shows the functional configuration of the grid interconnection operation controller 100 at the time when step S2 in Figure 6 is executed. In other words, Figure 7 shows means for setting the upper limit value (maximum value) $J_{max,i}$ of each virtual inertia and the lower limit value (minimum value) $D_{min,i}$ of each virtual damping constant at the time of an operation based on $J_{max,i}$ in this embodiment.

At the time of the operation of a power converter having a virtual inertia (virtual inertia operation), energy stored on the DC side of the power converter is used. This energy is corresponding to the mechanical rotational energy of the rotors of a synchronous generator. For example, if the renewable energy source is a wind turbine (WT), energy used for the virtual inertia operation is mechanical rotational energy possessed by the rotors of the generator of the WT. Alternatively, there is a case where electric energy stored in a battery is used instead.

The states (the presence or absence of variations or abnormalities) of these energy sources for the virtual inertia operation, for example, the state of the rotational angular frequency of the generator of a WT and the state of charge (SOC) of a battery have influence on the stable operation of the renewable energy system at the time of the virtual inertia operation. In other words, there is a possibility that that the specification (for example, any of ratings) of the power converter is exceeded at the time of the virtual inertia operation. Therefore, in order to realize the stable operation that does not exceeds the specification, it is desirable that the magnitude of the virtual inertia value should be limited using the magnitudes of the margins of the rotational angular frequency and the SOC (the magnitudes of margins between specification values (for example, rated values) and the actual operation values) and the margins of the output operations (the outputted angular frequency and the like) of the power converter.

With that, in this embodiment, the maximum value of the virtual inertia $J_{max,i}$ is set in consideration of these margins using the functional configuration shown in Figure 7. Hereinafter, it will be assumed that the renewable energy source is a wind turbine (WT).

As shown in Figure 7, the grid interconnection operation controller 100 collects the rotational angular frequency $\omega_{mi}$ and the output angular frequency $\omega_i$ of a WT that are operation states of the renewable energy system, the upper and lower limit values $\omega_{mi,max}$ and $\omega_{mi,min}$ of $\omega_{mi}$ that are specification data of the renewable energy system, and the upper and lower limit values $\omega_{i,max}$ and $\omega_{i,max}$ of the output angular frequencies $\omega_i$. Here, as shown above (Figure 1), the operation states and the specification data can be obtained from the decentralized controllers 105 and the storage device 106.

First, grid interconnection operation controller 100 calculates $\omega_i$ margins to the upper and lower limits, that is to say, ($\omega_{i,max}$-$\omega_i$, $\omega_i$-$\omega_{i,min}$), and $\omega_{mi}$ margins to the upper and lower limits, that is to say, ($\omega_{mi,max}$-$\omega_{mi}$, $\omega_{mi}$-$\omega_{i,min}$).

A minimum value selection unit 501 selects smaller margins of the margins to the upper limit values and the margins to the lower limit values, that is to say, selects the smallest margins, as a margin $\Delta\omega_{mi}$ of the rotational angular frequency and a margin $\Delta\omega_i$ of the output angular frequency.

A maximum virtual inertia setting unit 502 calculates the upper limit value $J_{max,i}$ of the virtual inertia using Expression (10) on the basis of $\omega_{mi}$, $\omega_i$, the margins $\Delta\omega_{mi}$ and $\Delta\omega_i$ selected by the minimum value selection unit 501. In Expression (10), $J_{WT,i}$ shows the inertia constant (inertia moment) of the rotors of each wind turbine.

[Math.10]

$$J_{\max,i} = J_{WT,i} \frac{\omega_{mi} \cdot \Delta\omega_{mi} + 0.5 \cdot \Delta\omega_{mi}^{2}}{\omega_i \cdot \Delta\omega_i + 0.5 \cdot \Delta\omega_i^{2}} \qquad (10)$$

Expression (10) can be derived in consideration of the margins $\Delta\omega_{mi}$, $\Delta\omega_i$ under the condition that energy stored on the DC side of the power converter used for the virtual inertia operation, that is to say, the mechanical rotational energy of the rotors of the wind turbine is equal to energy outputted through the virtual inertia operation of the power converter (corresponding to the mechanical rotational energy of the rotors of the virtual synchronous generator) according to the energy conservation law (the detailed derivation process is omitted). In addition, such derivation means can be applied to other renewable energy sources (a solar battery and the like).

The grid interconnection operation controller 100 sets $J_{max,i}$ calculated by the maximum virtual inertia setting unit 502 for the decentralized controller 105 of each power converter 104.

Furthermore, the grid interconnection operation controller 100 sets the minimum value $D_{min,i}$ of the virtual damping constant as follows for the stable operation of the power converter that does not exceed the specification at the time of the virtual inertia operation.

As shown in Figure 7, the grid interconnection operation controller 100 collects the output power $P_{ei}$ of each power converter in the operation state of the renewable energy system and the upper and lower limit values Pei,max and $P_{ei,min}$ of Pei that are specification data of the renewable energy system.

First, the grid interconnection operation controller 100 calculates $P_{ei}$ margins to the upper and lower limit values ($P_{ei,max}$-$P_{ei}$, $P_{ei}$-$P_{ei,min}$).

The minimum value selection unit 501 selects a smaller margin of the margin to the upper limit value and the margin to the lower limit value as a margin $\Delta P_{ei}$ of the output power, that is to say, the minimum value selection unit 501 selects the smallest margin.

A minimum damping constant setting unit 503 calculates a virtual damping constant corresponding to Ji,max, that is to say, the minimum virtual damping constant $D_{min,i}$ on the basis of the abovementioned Expressions (3) and (5) using the margin $\Delta P_{ei}$ outputted by the minimum value selection unit 501.

The grid interconnection operation controller 100 sets $D_{min,i}$ calculated by the minimum damping constant setting unit 503 for the decentralized controller 105 of each power converter 104.

As described above, according to this embodiment, the grid interconnection operation controller compares a required inertia value required to the renewable energy system by a grid operator with a total virtual inertia value calculated on the basis of the specification and operation state of the renewable energy system, and selects one of the two values and sets the selected value for the renewable energy system, and further calculates a total virtual damping constant in accordance with the set required inertia value or the set total virtual inertia value and sets the total virtual damping constant for the renewable energy system, which makes it possible for the renewable energy system to perform the virtual inertia operation that is as stable as the inertia operation of a synchronous generator.

In addition, according to this embodiment, a virtual inertia and a virtual damping constant are set for each power converter in accordance with the margins of the operation state to the specification of the renewable energy system, which makes it possible for the renewable energy system to operate steadily without exceeding the specification at the time of the virtual inertia operation.

Furthermore, the present invention is not limited to the above-described embodiment, and the present invention may include various kinds of modification examples. For example, the above embodiment has been described in detail in order to explain the present invention in an easily understood manner, and embodiments according to the present invention are not necessarily limited to embodiments which include all configurations that have been described so far. In addition, a new embodiment according to the present invention may be made by deleting a part of the configuration of an embodiment, by adding another configuration to a part of the configuration of the embodiment, or by replacing a part of configuration of the embodiment with another configuration.

For example, a power source that is a control target is not limited to a renewable energy source, and can be one of various kinds of distributed power sources (an engine generator or the like) that is interconnected to a power system via a power converter. Furthermore, it is conceivable that the renewable energy system includes one renewable energy source and one power converter respectively.

Reference Signs List

| | |
|---|---|
| 100 | Grid Interconnection Operation Controller, |
| 101 | Grid Operator, |
| 102 | Renewable Energy System, |
| 103 | Renewable Energy Source, |
| 104 | Power Converter, |
| 105 | Decentralized Controller, |
| 106 | Storage Device, |
| 107 | Inertia Meter, |
| 111 | Required Command, |
| 112 | Operation State, |
| 113 | Specification Data, |
| 114 | Total Virtual Inertia, |
| 115 | Virtual Inertia Command |
| 116 | Information, |
| 201 | Power System, |
| 202 | Transmission Cable, |
| 203 | Power Conversion Main Circuit, |
| 204 | Detection Unit, |
| 205 | Pulse Width Modulation Unit, |
| 301 | Power Calculation Unit, |
| 302 | Virtual Synchronous Generator Model, |
| 303 | Integrator, |
| 304 | Reactive Power Control Unit, |
| 305 | Waveform Generation Unit, |
| 501 | Minimum Value Selection Unit, |
| 502 | Maximum Virtual Inertia Setting Unit, |
| 503 | Minimum Damping Constant Setting Unit |

Claims

1. A controller (100) for a distributed power source (103) for setting virtual inertia for a power converter (104) that interconnects the distributed power source (103) to a power system,
   **characterized in that**
   the controller (100) calculates a virtual inertia value on the basis of a specification and an operation state of the distributed power source (103), and
the controller (100) sets the virtual inertia for the power converter (104) on the basis of the calculated virtual inertia value or a required inertia value required by a grid operator (101).

2.  The controller for the distributed power source according to claim 1,
wherein the controller has a meter for displaying the virtual inertia value set for the power converter.

3.  The controller for the distributed power source according to claim 1,
wherein the controller transmits the virtual inertia value set for the power converter to the grid operator.

4.  The controller for the distributed power source according to claim 1,
wherein the controller calculates a virtual damping constant set for the power converter on the basis of the calculated virtual inertia value.

5.  The controller for the distributed power source according to claim 4,
wherein the virtual damping constant is calculated under a predefined damping factor.

6.  The controller for the distributed power source according to claim 1,
wherein the controller sets the virtual inertia for the power converter on the basis of the margin of the operation state to the specification of the distributed power source.

7.  The controller for the distributed power source according to claim 6, comprising a maximum virtual inertia setting unit for calculating the upper limit value of the virtual inertia on the basis of the margin,
wherein the controller sets the virtual inertia for the power converter on the basis of the upper limit value.

8.  The controller for the distributed power source according to claim 7,
wherein the controller sets the virtual inertia for the power converter on the basis of a result obtained by comparing the upper limit value with the required inertia value.

9.  The controller for the distributed power source according to claim 4,
wherein the controller sets the virtual damping constant for the power converter on the basis of the margin of the operation state to the specification of the distributed power source.

10. The controller for the distributed power source according to claim 9,
wherein the controller has a minimum damping constant setting unit for calculating the lower limit value of the virtual damping constant on the basis of the margin,
wherein the controller sets the virtual damping constant for the power converter on the basis of the lower limit value.

11. A controller (100) for a plurality of distributed power sources (103) for setting virtual inertia for each of plural power converters (104) that interconnect the distributed power sources (103) to a power system,
**characterized in that**
the controller (100) calculates a total virtual inertia value for the plurality of distributed power sources (103) on the basis of specifications and operation states of the distributed power sources (103), and
the controller (100) sets the virtual inertia for each of the plural power converters (104) on the basis of the calculated total virtual inertia value or required inertia value required by a grid operator (101).

12. The controller for the distributed power sources according to claim 11,
wherein the controller sets the virtual inertia for each of the plural power converters on the basis of the margins of the operation states to the specifications of the distributed power sources.

# FIG. 1

GRID OPERATOR ~ 101

REQUIRED COMMAND ~ 111

TOTAL VIRTUAL INERTIA

114

POWER SYSTEM SIDE

RENEWABLE ENERGY SYSTEM SIDE

107

INERTIA METER (DISPLAY・RECORD)

116

GRID INTERCONNECTION OPERATION CONTROLLER ~ 100

113

SPECIFICATION DATA (RES SYSTEM, POWER CONVERTER)

106

OPERATION CONDITION OF DECENTRALIZED CONTROLLER ~ 112

115

VIRTUAL INERTIA COMMAND

| DECENTRALIZED CONTROLLER | DECENTRALIZED CONTROLLER | DECENTRALIZED CONTROLLER | ~ 105 |
| POWER CONVERTER | POWER CONVERTER | POWER CONVERTER | ~ 104 |
| RENEWABLE ENERGY SOURCE | RENEWABLE ENERGY SOURCE | RENEWABLE ENERGY SOURCE | ~ 103 |

RENEWABLE ENERGY SYSTEM ~ 102

# FIG. 2

## FIG. 3

## FIG. 4

FIG. 5

# FIG. 6

START

S1

REQUIRED VIRTUAL INERTIA VALUE $J_{req}$
FROM GRID OPERATER

S2

SET EACH UPPER LIMIT VALUE $J_{max, i}$ OF
VIRTUAL INERTIA AND EACH MINIMUM DAMPING
CONSTANT $D_{min, i}$ CORRESPONDING TO $J_{max, i}$

S3

$\Sigma J_{max, i} < J_{req}$ ?

YES

NO

S4-1

CALCULATE TOTAL
VIRTUAL INERTIA
$J_{opt} = \Sigma J_{max, i}$

S4-2

CALCULATE TOTAL
VIRTUAL INERTIA
$J_{opt} = J_{req}$

S5

SET TARGET DAMPING RATIO AND CALCULATE
OPTIMAL TOTAL DAMPING CONSTANT $D_{optimal}$

S6

SET COMMAND VALUE UNDER CONSTRAINED CONDITION
· TOTAL CONSTRAINED CONDITION
(1) $\Sigma J_{opt, i} = J_{opt}$
(2) $\min | \Sigma D_{opt, i} - D_{optimal} |$
· CONSTRAINED CONDITION TO EACH POWER CONVERTER
(3) $J_{opt, i} \leqq J_{max, i}$
(4) $D_{opt, i} \geqq D_{min, i}$ (FOR $J_{opt, i}$)

S7

OUTPUT SET VIRTUAL INERTIA COMMAND VALUE
· TOTAL VIRTUAL INERTIA, TOTAL DAMPING CONSTANT
: $J_{opt}$, $D_{optimal} = \Sigma D_{opt, i}$
· RESPECTIVE COMMAND VALUES : $J_{opt, i}$, $D_{opt, i}$

END

# FIG. 7

## INTERNATIONAL SEARCH REPORT

| International application No. |
|---|
| PCT/JP2018/046994 |

| A. CLASSIFICATION OF SUBJECT MATTER |
|---|
| Int. Cl. H02J3/24(2006.01)i, H02J3/38(2006.01)i |

According to International Patent Classification (IPC) or to both national classification and IPC

| B. FIELDS SEARCHED |
|---|
| Minimum documentation searched (classification system followed by classification symbols) |
| Int. Cl. H02J3/24, H02J3/38, H02J13/00 |

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2016-77138 A (MITSUBISHI ELECTRIC CORP.) 12 May 2016, entire document & JP 6444286 B2 & US 2016/0099567 A1, entire document & US 9876356 B2 | 1-12 |
| A | WO 20101108979 A2 (VESTAS WIND SYSTEMS A/S) 30 September 2010, entire document & AU 2010227499 A1 & CN 102414952 A & EP 2412070 A2 & US 2012/0035775 A1 & US 9341162 B2 | 1-12 |
| A | CN 104578173 A (XI'AN JIAOTONG UNIVERSITY) 29 April 2015, entire document (Family: none) | 1-12 |
| A | WO 20101055322 A2 (ULIVE ENTERPRISES LTD.) 20 May 2010, entire document & CN 102257720 A & EP 2377238 A2 & US 2011/0270463 A1 & US 8880236 B2 | 1-12 |

☐ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07.03.2019 | 19.03.2019 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110270463 A